# FASCICULE DE BREVET EUROPEEN

(11) **EP 1 060 876 B1**
(45) Date de publication et mention de la délivrance du brevet: **21.12.2005**
(21) Numéro de dépôt: 00401676.2
(22) Date de dépôt: 14.06.2000
(51) Int. Cl.: B32B 17/10, C03C 27/12, B60J 1/00

(54) **Vitrage feuillete reflechissant les rayons du soleil et les rayons thermiques**
Sonnenstrahlen- und Wärmestrahlenreflektierende Verbundglasscheibe
Sun beams and heat reflecting laminated glass

(30) Priorité: 17.06.1999 DE 19927683
(43) Date de publication de la demande: 20.12.2000
(73) Titulaire: SAINT-GOBAIN GLASS FRANCE, 92400 Courbevoie (FR)
(72) Inventeur: Kraemling, Franz, 52072 Aachen (DE)
(74) Mandataire: Renous Chan, Véronique

(56) Documents cités:
- EP-A- 0 077 672
- EP-A- 0 638 528
- EP-A- 0 728 712
- US-A- 4 782 216

## Description

La présente invention concerne un vitrage feuilleté avec les caractéristiques du préambule de la revendication 1.

Les vitrages en verre feuilleté ayant ces caractéristiques sont connus depuis longtemps et sont utilisés de nombreuses manières et dans de nombreuses applications, principalement dans les automobiles, mais aussi dans les bâtiments comme vitrage de sécurité ou de protection solaire. Lors de l'utilisation de vitrages en verre feuilleté avec une couche réfléchissant un certain spectre de rayons solaires, il est nécessaire que celle-ci soit protégée à l'intérieur du feuilletage, car les couches de protection solaire fabriquées pour l'instant en série ne résistent pas aux intempéries et aux attaques mécaniques.

Particulièrement pour les automobiles ayant une grande surface vitrée, on réduit l'échauffement à l'intérieur des habitacles en utilisant des verres feuilletés avec une fonction de protection solaire. On augmente ainsi le confort pour les passagers, et on peut en outre économiser des frais d'énergie, de poids et des frais de fabrication : les groupes de ventilation et d'air conditionné habituellement utilisés peuvent être dimensionnés de façon à avoir une plus petite puissance. Outre l'utilisation prévue par la loi de verres feuilletés comme pare-brise, on utilise de plus en plus fréquemment des vitrages en verre feuilleté pour les vitres latérales, les lunettes arrière et vitres de toits. Ces vitrages peuvent dans ces cas-là être équipés d'une couche réfléchissant principalement les rayons situés hors du spectre visible des rayons du soleil, en particulier les rayons infrarouges. En utilisant des verres feuilletés de protection solaire, on évite effectivement l'échauffement excessif de l'intérieur des habitacles de façon assez satisfaisante, même quand l'automobile a une grande surface vitrée. Mais la plupart des gens considèrent que les grandes surfaces vitrées donnent une sensation désagréable de froid, en raison de leur absorption calorifique lorsque les températures à l'extérieur sont plus basses que les températures à intérieur. Le bien-être des passagers en est affecté.

L'invention a alors pour but de perfectionner un vitrage en verre feuilleté avec des propriétés de protection solaire, de sorte que l'absorption calorifique d'une grande surface vitrée soit fortement diminuée en cas de températures extérieures basses. Le but est donc de procurer un vitrage en verre feuilleté qui, outre sa fonction de protection solaire, possède aussi une fonction calorifique isolante, sans devoir recourir à l'utilisation de vitres multiples du type vitrage isolant.

Ce but est atteint suivant invention par l'objet de la revendication 1 et des revendications suivantes.

Le vitrage en verre feuilleté selon l'invention est équipé sur sa surface orientée vers l'intérieur de l'habitacle, d'une couche transparente, réfléchissant principalement les rayons thermiques, et mécaniquement résistante. Des couches de ce type sont également appelées couches Low-E (bas-émissive) car elles possèdent une faible émissivité, d'environ 0,1 à 0,25 , avec une transmission lumineuse de 55% à 85% (longueur d'onde de 380 nm à 780 nm). Une émissivité comprise entre 0,1 et 0,25 signifie qu'entre 90% et 75% du rayonnement en ondes longues dans l'intervalle supérieur à 1100 nm est réfléchi par la couche. Sans une couche de ce type, ce rayon thermique, qui provient du rayonnement réémis par exemple par les surfaces intérieures dans le véhicule ou du rayonnement corporel d'une personne, serait absorbé par le vitrage et évacué à l'extérieur par convexion via le vent relatif pendant le fonctionnement du véhicule. Le vitrage agit dans ce cas comme un puit de chaleur, et, pour la personne qui se trouve dans son champ d'action, il produit une impression de corps rayonnant du froid.

Dans tout le présent texte, on comprend par « couche », une couche mince (intérférentielle) ou un empilement de couches minces.

Le vitrage en verre feuilleté suivant l'invention se caractérise également par une double sélectivité pour différentes longueurs d'ondes provenant de différentes directions des rayonnements. D'une part, les fractions de rayons solaires venant de l'extérieur qui possèdent une longueur d'onde supérieure à 780 nm sont en grande partie réfléchies. D'autre part, le rayonnement infrarouge thermique de longueurs d'ondes supérieures à 1100 nm, qui est réémis par l'intérieur sur le vitrage, est réfléchi également.

Les caractéristiques des revendications dépendantes 2 à 17 indiquent les perfectionnements avantageux de cet objet.

Dans une forme de réalisation du vitrage en verre feuilleté suivant l'invention, la couche réfléchissant les rayons thermiques est par exemple à base d'oxyde d'étain dopé au fluor. Des couches de ce type sont appliquées par pyrolyse lors de la fabrication du verre plat, tout de suite après le processus de flottage directement sur le verre encore chaud. On connaît différents procédés, dans lesquels des mélanges pulvérulents, liquides ou gazeux de composés (du type organo-métalliques ou halogénures métalliques) sont pulvérisés sur la feuille de verre flotté. L'oxyde d'étain dopé au fluor se forme sur le verre comme produit de la décomposition thermique de ces composés. Des couches de ce type peuvent être fabriquées en grandes quantités à un prix avantageux, de façon industrielle. Les vitrages qui en sont équipés peuvent de plus être trempés et bombés dans les étapes ultérieures du procédé. Des couches de ce type appliquées par pyrolyse peuvent être aussi disposées sur des surfaces vitrées dégagées sans risque de dégradation, parce qu'elles sont très résistantes à l'usure d'un point de vue mécanique, en particulier aux rayures.

Toutefois, d'autres systèmes de couche appliqués par exemple par pulvérisation peuvent être aussi dotés d'une résistance mécanique suffisante pour l'usage voulu, par exemple quand elles incorporent en surcouche une couche dure en nitrure de silicium.

Au sens de « couche », il faut comprendre la couche bas-émissive éventuellement associée à au moins une sous-couche et/ou au moins une surcouche. Ces couches peuvent avoir un rôle optique, un rôle de protection vis-à-vis de la migration des alcalins du verre pour la sous-couche, un rôle de protection mécanique/chimique pour la surcouche. La sous-couche et/ou la surcouche peuvent par exemple être en dérivé de silicium du type SiO₂, SiOC, SiON, Si₃N₄, et peuvent aussi être déposées sur le verre sur la ligne de flottage par des techniques de pyrolyse. Un empilement de couches préféré est ainsi l'empilement : verre/SiOC/SnO₂ :F. Bien sûr, on peut substituer à l'oxyde d'étain dopé au fluor d'autres oxydes dopés, ou un oxyde d'étain dopé avec un autre élément. Il peut s'agir d'ITO (oxyde d'indium dopé à l'étain), d'oxyde de zinc dopé.

Comme dit plus haut, on peut ainsi choisir des couches bas-émissives déposées par pulvérisation cathodique et protégées au moins par une surcouche. Il peut s'agir de couches d'oxyde dopé, ou de couches métalliques en argent par exemple. Pour plus de détails, on pourra se reporter, par exemple, aux brevets EP-648 196 et FR-2 701 474.

La couche de protection solaire du vitrage en verre feuilleté suivant l'invention est constituée d'au moins une fine couche fonctionnelle métallique transparente, qui est incorporée entre au moins une couche de diélectrique du type oxyde métallique ou nitrure de silicium à chaque fois. L'argent s'est imposé comme métal pour la couche fonctionnelle, car il agit relativement peu sur les couleurs et réfléchit de manière sélective le rayonnement infrarouge situé en dehors du domaine visible du rayonnement solaire. Les couches d'oxyde qui lui sont associées ont pour but d'améliorer, par le biais de leur indice de réfraction, les propriétés optiques du verre sur lequel elles sont appliquées et de protéger la couche fonctionnelle métallique de l'oxydation.

Des couches de protection solaire de ce type, qui peuvent par exemple être fabriquées avec le procédé de pulvérisation réactive, sont utilisées dans une large mesure dans les vitrages de bâtiments mais aussi déjà dans les automobiles. Dans la plupart des cas, on utilise des systèmes de couches à deux couches fonctionnelles en argent d'épaisseurs différentes, car leur rendement et la réflexion du rayonnement infrarouge situé en dehors du domaine visible par rapport à la transmission du rayonnement visible, sont plus grands. On a donc des empilements du type diélectrique(s)/Ag/diélectrique(s)/Ag/diélectrique(s), avec chacun des diélectriques qui peut être une ou plusieurs couches d'oxyde métallique du type SnO₂, ZnO, Nb₂O₅, TiO₂, Ta₂O₅, SiO₂ ou de nitrure du type AlN et/ou Si₃N₄. En outre, au-dessus et/ou au-dessous de chacune des couches d'argent, on peut avoir de fines couches de métal éventuellement partiellement oxydé, destinées à servir de couches de nucléation ou de couche sacrificielle. Elles peuvent être en Sn, Zn, Ti, Ni, Cr, NiCr, Nb, .... Pour plus de détails, on pourra se reporter, par exemple, aux brevets EP-638 528, EP-844 219, EP-847 965.

La position respective des deux types de couches utilisées dans l'invention (bas-émissive d'une part, anti-solaire d'autre part), dans le vitrage feuilleté est importante. Conventionnellement, on numérote les faces des verres en commençant par la face extérieure du verre dirigé vers l'extérieur.

La couche de protection solaire peut être disposée sur la face intérieure du verre extérieur (face 2), ou éventuellement sur la face extérieure du verre intérieur (face 3). Une troisième possibilité consiste à substituer à la feuille thermoplastique intercalaire du typ PVB ou EVA un empilement de deux feuilles thermoplastiques type PVB ou EVA entre lesquelles on dispose une feuille en polymère du type polytéréphtalate d'éthylène (PET) qui est munie sur une de ses faces de l'empilement de couches réfléchissant les infrarouges. Les feuilles de PVB ont habituellement une épaisseur de l'ordre de 0,38 mm, alors que la feuille de PET a de préférence une épaisseur de l'ordre de 60 µm. D'autres propriétés du vitrage en verre feuilleté peuvent être influencées par l'épaisseur des différentes feuilles. Ainsi, des feuilles de PVB un peu plus épaisses donnent une meilleure isolation phonique, une résistance accrue du vitrage à verre feuilleté aux agressions et aussi une plus grande protection contre le rayonnement ultraviolet (protection UV). Pour des exemples de ce type de structure, on peut se reporter notamment aux demandes de brevets EP-724 955, EP-758 583, EP 1 010 677. La couche bas-émissive, quant à elle, est de préférence sur la face 4 du vitrage, la face tournée vers l'intérieur du verre intérieur.

Dans un autre perfectionnement avantageux du vitrage feuilleté selon l'invention, les verres qui se trouvent devant la couche de protection solaire par rapport au soleil sont essentiellement, voire totalement transparents. Dans le cas où la couche de protection solaire est disposée en face 2, le verre extérieur est de préférence constitué de verre dit "blanc", pauvre en oxyde de fer. Il n'est donc pas teinté. Dans le cas où on a une feuille de PET située à l'intérieur du feuilleté et munie d'une couche de protection solaire, il est préférable que le verre extérieur et les feuilles qui se trouvent devant la couche de protection solaire soient essentiellement, voire totalement transparents. En utilisant des couches totalement transparentes devant la couche de protection solaire, la capacité de la couche de protection solaire à réfléchir les infrarouges peut être considérablement augmentée, car il n'y a pas ou peu d'absorption du rayonnement solaire.

On peut souhaiter un confort visuel, par exemple pour les vitres latérales et les lunettes arrière, à la manière de ce qu'on appelle le vitrage « dark-tail » ou pour les vitres de toit de grande surface. Dans ce cas, un verre ou une feuille, qui se trouve derrière la couche de protection solaire quand on regarde dans la direction d'où vient le rayonnement solaire, est de préférence choisi teinté dans la masse ou imprimé. Du fait de l'absorption du rayonnement solaire non réfléchi, le vitrage feuilleté se réchauffe certes globalement, grâce à la couche Low-E sur la face orientée vers l'intérieur (face 4). Mais le réchauffement de l'intérieur par émission de chaleur peut être considérablement réduit par rapport à un vitrage feuilleté sans couche Low-E du fait de la réduction de l'émissivité. Le réchauffement de l'intérieur est ainsi diminué en limitant le rayonnement secondaire, contrairement à un vitrage feuilleté sans couche Low-E.

Les deux verres du feuilleté sont constitués de verre flotté d'une épaisseur généralement comprise entre 1 mm et 4 mm. Une épaisseur de verre de 2,1 mm représente un bon compromis entre stabilité et poids. Si le vitrage feuilleté doit être bombé, les deux verres sont, de façon connue, bombés par paire par gravité et ensuite associées l'une avec l'autre par la feuille thermoplastique sous l'action de la pression et/ou de la chaleur. Dans ce procédé de bombage, les deux verres peuvent également avoir des épaisseurs différentes. Avant de les feuilleter, il va de soi qu'il faut déposer la couche réfléchissant les rayons thermiques et la couche de protection solaire. Lorsque des résistances élevées à la flexion sont souhaitées, il est également possible d'utiliser des verres partiellement ou complètement trempés. Les deux verres sont alors (partiellement) trempés et bombés séparément. Dans ce cas, les deux verres doivent posséder des épaisseurs semblables, afin que leurs lignes de courbure aient la forme la plus semblable possible.

La couche de protection solaire peut aussi être utilisée pour d'autres applications (conjointement avec sa fonction thermique) : en tant que dispositif de chauffage de vitre ou en tant qu'antenne de réception pour les rayons électromagnétiques. La couche réfléchissant les rayons infrarouges est en effet conductrice de l'électricité. Il faut simplement la munir d'amenées de courant. La couche peut, le cas échéant, être adaptée dasn sa forme selon l'application envisagée. Elle peut, par exemple, avoir la forme d'antenne fendue.

D'autres détails et avantages de l'objet de l'invention ressortent de l'exemple suivant, non limitatif, d'un vitrage feuilleté utilisé en toit-auto.

### Exemple:

Le vitrage feuilleté suivant l'invention, prévu pour le montage sur un toit de véhicule est, (considéré de l'extérieur vers l'intérieur), constitué :
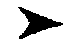 d'un verre extérieur d'une épaisseur de 3 mm,
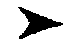 d'une couche de protection solaire transparente (face 2),
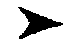 d'une feuille interclaire totalement transparente en polybutyral de vinyle d'une épaisseur de 0,76 mm,
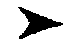 d'une autre feuille intercalaire d'une épaisseur de 0,38 mm en polybutyral de vinyle teinté,
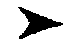 d'un verre intérieur d'une épaisseur de 3 mm,
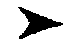 et d'une couche de protection thermique transparente, mécaniquement résistante (face 4), du type couche Low-E.

Les deux feuilles en polybutyral de vinyle forment une couche adhésive thermoplastique pour les deux verres. Le feuilletage est effectué à l'aide d'un procédé habituel dans l'industrie du verre, en utilisant de la pression et/ou de la chaleur. La feuille voisine du verre extérieur possède une épaisseur élevée et protège donc l'autre feuille de PVB qui est teintée, des rayons UV qui pourraient détruire ses pigments.

La couche de protection solaire, qui réfléchit essentiellement les rayons situés en dehors du spectre visible de rayons solaires, donc en particulier les rayons infrarouges, est déposée par pulvérisation cathodique assistée par champ magnétique, de façon connue. Cette couche comprend un empilement ayant deux couches fonctionnelles en argent d'épaisseurs différentes, qui sont chacune entourées de couches de diélectrique du type oxyde métallique et/ou nitrure de métal ou de silicium. La réflexion dans l'infrarouge s'élève déjà à 50% au-dessus d'une longueur d'onde de 900 nm et monte à plus de 80% pour le rayonnement de longueur d'ondes plus grande. La transmission dans le visible est par exemple d'environ 78% pour une lumière ayant une longueur d'onde de 580 nm.

Le verre intérieur est muni sur sa surface orientée vers l'intérieur (face 4) d'une couche Low-E de SnO₂ dopé au fluor. Cette couche Low-E peut, par exemple, être fabriquée par pyrolyse directement sur le ruban de verre float, en projetant un composé d'étain organique pulvérulent et un composé de fluor pulvérulent, qui sont en suspension dans un courant porteur gazeux, sur le verre encore chaud, à une température de 400°C à 650°C. Cette couche possède un facteur Low-E de 0,15 et cela signifie que 85% du rayonnement infrarouge de grande longueur d'onde est réfléchi. Elle peut aussi être déposée par pyrolyse en phase gazeuse (CVD) et être de préférence déposée sur une précouche en SiOC déposée par CVD .

Il va de soi que les couches de protection solaire et thermique doivent être déposées avant le feuilletage des deux verres.

La transmission lumineuse du verre feuilleté dans son ensemble est égale à 31%, 69% du rayonnement visible est réfléchi ou, selon le cas, absorbés par la couche calorifique, la couche Low-E et la feuille de PVB teintée.

## Revendications

1. Vitrage feuilleté transparent comprenant au moins deux verres unis par une feuille intercalaire thermoplastique et une couche de protection solaire réfléchissant essentiellement les rayons situés hors du spectre visible du rayonnement solaire, en particulier les rayons infrarouges, ***caractérisé en ce que*** le vitrage feuilleté comprend aussi une couche transparente réfléchissant essentiellement les rayons thermiques, du type couche bas-émissive qui est disposée plus vers l'intérieur que la couche de protection solaire.

2. Vitrage feuilleté selon la revendication 1, ***caractérisé en ce que*** la couche réfléchissant les rayons thermiques est une couche d'oxyde métallique dopé, notamment d'oxyde d'étain dopé au fluor, et de préférence déposée par pyrolyse.

3. Vitrage feuilleté selon la revendication 1 ou 2, ***caractérisé en ce que*** la couche réfléchissant les rayons thermiques est munie d'au moins une sous-couche et/ou d'au moins une surcouche, et notamment d'une couche de protection mécaniquement résistante.

4. Vitrage feuilleté selon l'une des revendications précédentes, ***caractérisé en ce que*** la couche de protection solaire est constituée d'un empilement de couches comprenant au moins une couche métallique incorporée entre des couches de diélectrique du type oxyde métallique ou nitrure comme AlN ou Si₃N₄, en particulier d'au moins une couche à base d'argent.

5. Vitrage feuilleté selon la revendication 4, ***caractérisé en ce que*** la couche de protection solaire est constituée d'un empilement de couches comprenant deux couches d'argent d'épaisseurs différentes.

6. Vitrage feuilleté selon l'une des revendications précédentes, ***caractérisé en ce que*** la couche de protection solaire est appliquée sur la face intérieure du verre extérieur, en face 2, ou sur la face extérieure du verre intérieur, en face 3.

7. Vitrage feuilleté selon l'une des revendications 1 à 5, ***caractérisé en ce que*** la feuille intercalaire est équipée d'une couche de protection solaire.

8. Vitrage feuilleté suivant la revendication 7, ***caractérisé en ce que*** la feuille intercalaire comprend au moins deux feuilles de polymère thermoplastique du type PVB et entre celles-ci une feuille de polymère du type PET munie de la couche de protection solaire.

9. Vitrage feuilleté selon la revendication 8, ***caractérisé en ce que*** la feuille munie de la couche de protection solaire a une épaisseur comprise entre 25 µm et 90 µm, et de préférence d'environ 60 µm.

10. Vitrage feuilleté selon l'une des revendications précédentes, ***caractérisé en ce que*** la couche réfléchissant les rayons thermiques est disposée sur la face intérieure du verre intérieur, en face 4.

11. Vitrage feuilleté selon l'une quelconque des revendications précédentes, ***caractérisé en ce que***, par rapport à l'extérieur, les couches/feuilles/verres du vitrage feuilleté devant la couche de protection solaire sont essentiellement ou totalement transparentes.

12. Vitrage feuilleté selon l'une quelconque des revendications précédentes, ***caractérisé en ce que*** , par rapport à l'extérieur, derrière la couche de protection solaire, au moins une des couches/feuilles/verres du vitrage est teintée ou imprimée.

13. Vitrage feuilleté selon la revendication 12, ***caractérisé en ce que*** la feuille intercalaire comprend plusieurs feuilles thermoplastiques, dont une transparente et une teintée dans la masse ou imprimée, la feuille teintée étant disposée plus vers l'intérieur que la feuille transparente.

14. Vitrage feuilleté selon l'une quelconque des revendications précédentes, ***caractérisé en ce que*** les deux verres ont chacun une épaisseur comprise entre 1 mm et 4 mm, et de préférence d'environ 2,1 mm.

15. Vitrage feuilleté selon l'une quelconque des revendications précédentes, ***caractérisé en ce que*** les deux verres sont au moins partiellement trempés et/ou bombés.

16. Vitrage feuilleté selon l'une quelconque des revendications précédentes, ***caractérisé en ce que*** la couche de protection solaire sert en plus de couche chauffante.

17. Vitrage feuilleté suivant l'une quelconque des revendications précédentes, ***caractérisé en ce que*** la couche de protection solaire sert en plus d'antenne de réception pour les rayonnements électromagnétiques.

18. Application du vitrage selon l'une des revendications précédentes, en tant que parebrise, vitre latérale, lunette arrière ou toit-auto de véhicules du type voiture.

## Patentansprüche

1. Transparente Verbundglasscheibe bestehend aus wenigstens zwei mittels einer thermoplastischen Zwischenschicht verbundenen Glasscheiben und einer im wesentlichen Strahlen außerhalb des sichtbaren Spektrums der Sonnenstrahlung, insbesondere Infrarotstrahlen, reflektierenden Sonnenschutzschicht, **dadurch gekennzeichnet, dass** die Verbundglasscheibe auch mit einer transparenten, im wesentlichen Wärmestrahlen reflektierenden Beschichtung vom Typ Low-E versehen ist, die weiter innen angeordnet ist als die Sonnenschutzschicht.

2. Verbundglasscheibe nach Anspruch 1, **dadurch gekennzeichnet, dass** die Wärmestrahlen reflektierende Beschichtung eine vorzugsweise pyrolytisch aufgebrachte, dotierte Metalloxidschicht, insbesondere eine mit Fluor dotierte Zinnoxidschicht, ist.

3. Verbundglasscheibe nach Anspruch 1 oder 2, **dadurch gekennzeichnet, dass** die Wärmestrahlen reflektierende Beschichtung mit mindestens einer Deckschicht und/oder wenigstens einer Unterschicht versehen ist, und insbesondere eine mechanisch widerstandsfähige Schutzschicht aufweist.

4. Verbundglasscheibe nach einem der vorhergehenden Ansprüche, **dadurch gekennzeichnet, dass** die Sonnenschutzschicht aus einem Schichtsystem mit mindestens einer zwischen dielektrischen Metalloxid- oder Nitridschichten wie AIN oder Si3N4 eingebetteten Metallschicht, insbesondere einer metallischen Silberschicht, besteht.

5. Verbundglasscheibe nach Anspruch 4, **dadurch gekennzeichnet, dass** die Sonnenschutzschicht aus einem Schichtsystem mit zwei Silberschichten unterschiedlicher Dicke besteht.

6. Verbundglasscheibe nach einem der vorhergehenden Ansprüche, **dadurch gekennzeichnet, dass** die Sonnenschutzschicht auf der innenliegenden Oberfläche der äußeren Scheibe, auf Fläche 2, oder auf der äußeren Fläche der inneren Scheibe, auf Fläche 3, aufgebracht ist.

7. Verbundglasscheibe nach einem der Ansprüche 1-5, **dadurch gekennzeichnet, dass** die Zwischenschicht mit einer Sonnenschutzschicht versehen ist.

8. Verbundglasscheibe nach Anspruch 7, **dadurch gekennzeichnet, dass** die Zwischenschicht mindestens zwei thermoplastische Polymerfolien vom Typ PVB und eine zwischen diesen mit der Sonnenschutzschicht versehene Polymerfolie vom Typ PET umfasst.

9. Verbundglasscheibe nach Anspruch 8, **dadurch gekennzeichnet, dass** die mit der Sonnenschutzschicht versehene Folie eine Dicke zwischen 25 µm und 90 µm, vorzugsweise etwa 60 µm besitzt.

10. Verbundglasscheibe nach einem der vorhergehenden Ansprüche, **dadurch gekennzeichnet, dass** die Wärmeschutzschicht auf der Innenseite des inneren Glases, auf Fläche 4, angeordnet ist.

11. Verbundglasscheibe nach einem der vorhergehenden Ansprüche, **dadurch gekennzeichnet, dass** von außen betrachtet die Schichten/Folien/Gläser der Verbundglasscheibe vor der Sonnenschutzschicht im wesentlichen transparent oder klar transparent sind.

12. Verbundglasscheibe nach einem der vorhergehenden Ansprüche, **dadurch gekennzeichnet, dass** von außen betrachtet hinter der Sonnenschutzschicht zumindest eine der Schichten/Folien/Gläser der Verbundglasscheibe eingefärbt oder bedruckt ist.

13. Verbundglasscheibe nach Anspruch 12, **dadurch gekennzeichnet, dass** die Zwischenschicht mehrere thermoplastische Folien umfasst, von denen eine transparent und eine in der Masse eingefärbt oder bedruckt ist, und die eingefärbte Folie weiter nach innen angeordnet ist als die transparente Folie.

14. Verbundglasscheibe nach einem der vorhergehenden Ansprüche, **dadurch gekennzeichnet, dass** die beiden festen Glasscheiben eine Dicke von 1mm bis 4mm, vorzugsweise etwa 2,1 mm aufweisen.

15. Verbundglasscheibe nach einem der vorhergehenden Ansprüche, **dadurch gekennzeichnet, dass** die beiden Glasscheiben zumindest teilvorgespannt und/oder gebogen sind.

16. Verbundglasscheibe nach einem der vorhergehenden Ansprüche, **dadurch gekennzeichnet, dass** die Sonnenschutzschicht zusätzlich als Heizschicht dient.

17. Verbundglasscheibe nach einem der vorhergehenden Ansprüche, **dadurch gekennzeichnet, dass** die Sonnenschutzschicht zusätzlich als Empfangsantenne für elektromagnetische Strahlung dient.

18. Anwendung der Verglasung nach einem der vorhergehenden Ansprüche in der Eigenschaft als Windschutzscheibe, Seitenscheibe, Heckscheibe oder Dach eines Autos.

## Claims

1. Transparent laminated glazing comprising at least two glass panes united by a thermoplastic intercalating sheet and an antisun coat which essentially reflects the rays outside the visible spectrum of the solar radiation, in particular infrared rays, ***characterized in that*** the laminated glazing also comprises a transparent coat which essentially reflects heat rays, of the low-emissive coat type, which is placed more towards the interior than the antisun coat.

2. Laminated glazing according to Claim 1, ***characterized in that*** the coat which reflects heat rays is a coat of doped metal oxide, in particular of fluorine-doped tin oxide, and is preferably deposited by pyrolysis.

3. Laminated glazing according to Claim 1 or 2, ***characterized in that*** the coat which reflects heat rays is equipped with at least one undercoat and/or at least one overcoat, and in particular with a mechanically strong protective coat.

4. Laminated glazing according to one of the preceding claims, ***characterized in that*** the antisun coat consists of a stack of coats comprising at least one metallic coat incorporated between coats of dielectric of the metal oxide or nitride type such as AIN or Si₃N₄, in particular at least one silver-based coat.

5. Laminated glazing according to Claim 4, ***characterized in that*** the antisun coat consists of a stack of coats comprising two silver coats of different thicknesses.

6. Laminated glazing according to one of the preceding claims, ***characterized in that*** the antisun coat is applied to the inner face of the outer glass, on face 2, or to the outer face of the inner glass, on face 3.

7. Laminated glazing according to one of Claims 1 to 5, ***characterized in that*** the intercalating sheet is equipped with an antisun coat.

8. Laminated glazing according to Claim 7, ***characterized in that*** the intercalating sheet comprises at least two sheets of thermoplastic polymer of the PVB type and, between these, a sheet of polymer of the PET type equipped with the antisun coat.

9. Laminated glazing according to Claim 8, ***characterized in that*** the sheet equipped with the antisun coat is between 25 µm and 90 µm in thickness and preferably about 60 µm in thickness.

10. Laminated glazing according to one of the preceding claims, ***characterized in that*** the coat which reflects heat rays is placed on the inner face of the inner glass, on face 4.

11. Laminated glazing according to any one of the preceding claims, ***characterized in that,*** relative to the exterior, the coats/sheets/glass panes of the laminated glazing before the antisun coat are essentially or totally transparent.

12. Laminated glazing according to any one of the preceding claims, ***characterized in that,*** relative to the exterior, behind the antisun coat, at least one of the coats/sheets/glass panes of the glazing is tinted or printed.

13. Laminated glazing according to Claim 12, ***characterized in that*** the intercalating sheet comprises several thermoplastic sheets, one of which is transparent and one of which is tinted in the bulk or printed, the tinted sheet being placed more towards the interior than the transparent sheet.

14. Laminated glazing according to any one of the preceding claims, ***characterized in that*** the two glass panes are each between 1 mm and 4 mm in thickness and preferably about 2.1 mm in thickness.

15. Laminated glazing according to any one of the preceding claims, ***characterized in that*** the two glass panes are at least partially toughened and/or bended.

16. Laminated glazing according to any one of the preceding claims, ***characterized in that*** the antisun coat also serves as a heating coat.

17. Laminated glazing according to any one of the preceding claims, ***characterized in that*** the antisun coat also serves as a receiving antenna for electromagnetic radiation.

18. Application of the glazing according to one of the preceding claims, as a windscreen, a side window pane, a rear window or a sunroof for vehicles such as motor cars.
